Europäisches Patentamt

European Patent Office

Office européen des brevets

(19)

(11) Publication number: **0 117 350**
A2

# (12) EUROPEAN PATENT APPLICATION

(21) Application number: **83307401.6**

(22) Date of filing: **06.12.83**

(51) Int. Cl.³: **C 08 F 259/00,** C 09 D 3/00,
C 08 L 51/00

(30) Priority: **30.12.82 US 454794**

(43) Date of publication of application: **05.09.84**
**Bulletin 84/36**

(84) Designated Contracting States: **BE DE FR GB IT NL**

(71) Applicant: **MOBIL OIL CORPORATION, 150 East 42nd**
**Street, New York New York 10017 (US)**

(72) Inventor: **Chen, Albert Chung-Pung, 14 Vaux Hall Road,**
**East Brunswick New Jersey 08816 (US)**
Inventor: **Spencer, Arthur Theodore, 43 Woodlane Road,**
**Lawrenceville New Jersey 08648 (US)**

(74) Representative: **West, Alan Harry, Mobil**
**Court 3 Clements Inn, London WC2A 2EB (GB)**

(54) A carboxylic acid-containing polyvinyl halide-based graft copolymer.

(57) A graft copolymer of a carboxylic acid-containing
monomeric component on a polyvinyl halide type resin
backbone such as polyvinyl chloride (PVC), contains at least
5% by weight of the carboxylic acid monomer and can be
neutralized and formulated into aqueous dispersions useful
a coating compositions.

EP 0 117 350 A2

ACTORUM AG

## A CARBOXYLIC ACID-CONTAINING POLYVINYL HALIDE-BASED GRAFT COPOLYMER, A METHOD OF PRODUCING SAME, A COATING COMPOSITION CONTAINING SAME AND A METHOD OF PRODUCING SUCH A COATING COMPOSITION

This invention relates to a polyvinyl halide type graft copolymer resin, a method of producing same, a coating composition containing same and a method of producing such a coating composition.

Polyvinyl halide type resins such as polyvinyl chloride (PVC) and polyvinylidene chloride are known to be useful components in sanitary coating compositions suitable for providing coatings on food containers such as metal beer cans. Resins of this type such as PVC are highly hydrophobic materials which have heretofore been dissolved in various organic solvents for incorporation into sprayable, liquid coating compositions. Utilization of large amounts of organic solvents in such systems, however, can lead to disadvantages involving solvent costs, energy costs, fire and health hazards and emission of pollutants into the atmosphere. Formulation of aqueous coating compositions containing polyvinyl halide-based resins would alleviate or minimize some or all of these disadvantages.

Accordingly, the present invention resides in one aspect in a polyvinyl halide-based graft copolymer resin which is water dispersible and which is a graft copolymer of a monoethylenically unsaturated monomeric component comprising monoethylenically unsaturated carboxylic acid monomers, onto a vinyl resin backbone comprising vinyl chloride homopolymers or copolymers or vinylidene halide homopolymers or copolymers, wherein at least about 5% of the total weight of said graft copolymer is derived from monoethylenically unsaturated carboxylic acid monomers.

In a further aspect, the present invention resides in a method of preparing a water dispersible polyvinyl halide-based graft copolymer, said method comprising:

a)   forming a solution or slurry of a vinyl resin material selected from vinylchloride homopolymers or copolymers and vinylidene halide homopolymers or copolymers, in a substantially anhydrous organic solvent;

b)    combining with said solution or slurry both a free radical initiator and a monoethylenically unsaturated monomeric component comprising monoethylenically unsaturated carboxylic acid monomers, thereby to form a reaction mixture; and

c)    maintaining said reaction mixture under free radical graft polymerization conditions for a time sufficient to form a polyvinyl halide-based graft copolymer containing monoethylenically unsaturated carboxylic acid monomers to the extent of at least 5% by weight of said graft copolymer.

In yet a further aspect, the present invention resides in a coating composition comprising an aqueous dispersion of a polyvinyl halide-based graft copolymer of a monoethylenically unsaturated monomeric component comprising monoethylenically unsaturated carboxylic acid monomers, onto a vinyl resin backbone comprising vinyl chloride homopolymers or copolymers or vinylidene halide homopolymers or copolymers, wherein at least 5% of the total weight of said graft copolymer is derived from monoethylenically unsaturated carboxylic acid monomers, said graft copolymer being neutralized to at least 10% with a neutralizing agent selected from ammonia, ammonium hydroxide and tertiary amines, said aqueous dispersion having a solids content of from 10% to 40% by weight.

In still yet a further aspect, the present invention resides in a method for preparing a coating composition comprising an aqueous dispersion of a polyvinyl halide-based graft copolymer, said method comprising

a)    forming a solution or slurry of a vinyl resin material selected from vinylchloride homopolymers or copolymers and vinylidene halide homopolymers or copolymers, in a substantially anhydrous organic solvent;

b)    combining with said solution or slurry both a free radical initiator and a monoethylenically unsaturated monomeric component comprising monoethylenically unsaturated carboxylic acid monomers, to thereby form a reaction mixture;

c)    maintaining said reaction mixture under free radical graft polymerization conditions for a time sufficient to form therein a polyvinyl halide-based graft copolymer containing monoethylenically unsaturated carboxylic acid monomers to the extent of at least 5% by weight of said graft copolymer;

d)    neutralizing said graft copolymer in said reaction mixture with a neutralizing agent selected from ammonia, ammonium hydroxide and tertiary amine; and

e)    dispersing said neutralized graft copolymer in water to form an aqueous dispersion having a solids content of from 10% to 40% by weight.

The graft copolymers of the present invention are prepared from a particular polymeric backbone comprising either vinyl chloride homopolymers or copolymers or vinylidene halide homopolymers or copolymers.  Vinyl chloride homopolymer, e.g., polyvinyl chloride (PVC), is a commercially marketed resin material prepared by polymerization of vinyl chloride monomer.  PVC is a thermoplastic resin available as powder or granules.  In addition to the homopolymer, vinylchloride can be copolymerized with up to 25% of the resulting copolymer with other vinyl monomers.  Such additional vinyl monomers can include, for example, vinyl acetate, vinyl alcohol, maleic acid, and vinylidene chloride (VDC).

Vinylidene halide homopolymers or copolymers can also comprise the polymeric backbone of the graft copolymer resin.  The most preferred material of this type is polyvinylidene chloride which is, like PVC, a commercially marketed thermoplastic resin.  Vinylidene halide monomer can also be copolymerized with lesser amounts of other vinyl or vinylidene monomers.  Thus, copolymers of vinylidene halide, such as VDC, vinylidene bromide or vinylidene fluoride with vinyl chloride, vinyl acetate, vinyl alcohol and/or maleic acid are also suitable for use as the polymeric backbone of the graft copolymer.

The polymeric backbone material, whether based on PVC or polyvinylidene halide, generally has a molecular weight ranging from 5,000 to 35,000.  More preferably, the molecular weight of the polymeric backbone ranges from 8,000 to 20,000.

0117350

The polyvinyl chloride or polyvinylidene halide materials are reacted in a graft polymerization procedure under conditions described hereinafter with a monoethylenically unsaturated monomeric component which contains at least some monoethylenically unsaturated carboxylic acid monomers. The monoethylenically unsaturated carboxylic acid monomers of such a monomeric component can include conventional carboxylic acid-containing monomers such as acrylic acid, methacrylic acid, maleic acid, itaconic acid, fumaric acid and crotonic acid. Acrylic acid and methacrylic acid are the most preferred of these carboxylic acid-containing monomers.

The monoethylenically unsaturated monomeric component can also contain a wide variety of other monomers in addition to the carboxylic acid monomer. Such additional monoethylenically unsaturated monomers can include, for example, methyl acrylate, methyl methacrylate, ethyl acrylate, ethyl methacrylate, propyl acrylate, propyl methacrylate, butyl acrylate, butyl methacrylate, hydroxyethyl acrylate, hydroxyethyl methacrylate, hydroxypropyl methacrylate, acrylonitrile, methacrylonitrile, acrylamide, methacrylamide, and monomers copolymerizable therewith, such as styrene, p-methylstyrene, and lower monoolefins. The preferred additional monoethylenically unsaturated monomers are ethyl acrylate, methyl methacrylate, butyl methacrylate and styrene.

The monoethylenically unsaturated monomeric component used contain carboxylic acid monomers in an amount sufficient to provide at least 5% by weight of such carboxylic acid monomers in the resulting graft copolymer. Typically the carboxylic acid monomers can comprise at least 10% by weight of the monoethylenically unsaturated monomeric component. More preferably, the monoethylenically unsaturated monomeric component will contain from 20% to 65% by weight of carboxylic acid monomers.

The graft copolymers formed from the polyvinyl halide backbone and the monoethylenically unsaturated carboxylic acid-containing monomeric component as hereinbefore described may be prepared by the process of reacting these two components under free radical graft polymerization reaction conditions. As a first step in such a process, a solution or slurry of the polyvinyl halide resin backbone material can be formed using a substantially anhydrous organic solvent which is capable of dissolving or swelling the vinyl resin.  Suitable solvents of this type include, for example, oxygenates such as methyl ethyl ketone, diisobutylketone, butanol, methoxyethanol, methoxypropanol, ethoxyethanol, 2-butoxyethanol (Butyl Cellosolve) and 2-hexoxyethanol (Hexyl Cellosolve); aromatic hydrocarbons such as toluene; and chlorinated hydrocarbons.  The non-volatile material, i.e. solids, content in such solutions or slurries will generally range from 20% to 60% by weight before the graft polymerization reaction is initiated.

To carry out the graft polymerization reaction, both the monoethylenically unsaturated monomeric component and one or more free radical initiators can be combined with, e.g., added to, the vinyl resin solution or slurry to form a reaction mixture.  The monomeric component and free radical initiator can be added simultaneously or in any desired order.  Free radical initiators can be any of the conventional peroxide compounds, redox initiators or azo compounds known in the art to be suitable catalysts for free radical polymerization.  Such materials include, for example, t-butyl-perbenzoate, benzoyl peroxide, t-butyl-peroxy-isopropyl carbonate, and 4,-4'-azobisisobutyronitrile.

The monoethylenically unsaturated monomeric component is combined with the resin solution or slurry in an amount sufficient to form a graft copolymer containing at least 5% by weight of carboxylic acid-containing monomers.  Thus the monomeric component will generally comprise from 20% to 60% by weight, more preferably from 30% to 50% by weight, of the reaction solids.  Free radical initiator is, of course, added to the reaction mixture in catalytic amounts.  Such amounts generally comprise from 1% to 10% by weight, more preferably from 3% to 8% by weight, of the monomeric components.

Once the graft polymerization reaction mixture has been formed, the reaction mixture is maintained under free radical polymerization conditions for a time sufficient to form the graft copolymer.  Such conditions will generally include maintenance of the reaction mixture at a temperature of from 90°C to 120°C for a period of from 2 to 8 hours. It has been found that by utilizing the particular vinyl halide-based resins and carboxylic acid monomer-containing monoethylenically unsaturated monomeric components described above, water dispersible, polyvinyl halide-based graft copolymers can be prepared under substantially anhydrous free radical reaction conditions. Thus the polyvinyl halide-based resin backbone material does not need to be in agglomerated particulate form and further does not need to be activated by ozone or ionizing radiation treatment. The polyvinyl halide-based resins can therefore be unozonized and non-irradiated.

In a particularly preferred embodiment an epoxy resin material can be combined with, e.g., added to, the graft polymerization reaction mixture in order to stabilize the resulting graft copolymers formed therein. Epoxy resins can act as HCl scavengers to prevent decomposition and discoloration of the resulting graft copolymers. The epoxy resins which may be so employed are simple or complex reaction products of polyhydric, mono- and polynuclear phenols with polyfunctional halohydrins and/or glycerol dichlorohydrin. Several of these resins are readily available commerical products. Typical polyhydric phenols useful in the preparation of epoxy resins include resorcinol and various bisphenols resulting from the condensation of phenol with aldehydes and ketones such as formaldehyde, acetaldehyde, acetone, methyl ethyl ketone and the like. A typical epoxy resin is the reaction product of epichlorohydrin and 2,2-bis(p-hydroxyphenol)propane (Bisphenol A).

The epoxy resins useful as stabilizing agents are generally low molecular weight materials having a relatively high epoxy content. Generally, such stabilizing epoxy resins have an epoxy equivalent weight of from 180 to 800, more preferably from 180 to 500. Examples of suitable epoxy resins useful as stabilizing agents include those marketed under the tradenames EPON 828 and DER 331. If employed, epoxy resin stabilizing agents can advantageously be added to the graft polymerization reaction mixture to the extent of from 1% to 10% by

weight of the reactants.

Whether or not epoxy resin stabilizers are utilized, the graft copolymers formed according to the process hereinbefore described are provided at the completion of the polymerization reaction to the extent desired in a solution or slurry containing from 10% to 50%, more preferably from 30% to 60% by weight of non-volatile material. The resulting graft copolymers can have an acid number of from 20 to 120, more preferably from 40 to 80.

The resultant solutions or slurries of the carboxylic acid-containing polyvinyl halide graft copolymer resins can be used to prepare aqueous resin dispersions which are useful as coating compositions. To prepare such dispersions, the acidic graft copolymer resin in the solution or slurry is at least partially neutralized with an amine, ammonia or ammonium hydroxide, and water is added to form an aqueous dispersion of the neutralized graft copolymer resin.

Amines which can be used to neutralize the acidic graft copolymer resin material include, for example, triethylamine, tripropylamine, tributylamine, dimethylethanolamine, diethylethanolamine, dimethylethylamine, and methyldiethylamine. Dimethylethanolamine (dimethylaminoethanol) is the preferred neutralizing agent.

Upon addition of neutralizing agent to effect at least partial neutralization of the acid groups of the graft copolymer, water can be combined with, e.g., added to, the graft copolymer-containing mixture while agitating the mixture to disperse the solid polymeric material. Water and neutralizing agent can be added simultaneously, at least during the initial period of neutralization. In forming the aqueous dispersion, water and neutralizing agent are generally added in amounts sufficient to neutralize at least 10% of the acid groups of the graft copolymer, more preferably from 30% to 100% of the copolymer acid groups. The acid number of the resulting neutralized graft copolymeric material can range from 20 to 120, more preferably from 40 to 80. The pH of the aqueous dispersion so formed generally ranges from 7.0 to 9.0.

Water and neutralizing agent are generally added in amounts sufficient to provide an aqueous dispersion which is useful as a coating composition and which has a solids content of from 10% to 40% by weight, more preferably from 18% to 35% by weight. Polymeric material in such dispersions is generally present in the form of particles having an average particle size of from 0.10 to 0.60 micron, more preferably from 0.10 to 0.20 micron.

The volatile system (including amine, ammonia, or ammonium hydroxide) of such aqueous dispersions will be between 60% and 90% by weight of the finished coating composition, preferably 65-82% by weight. 65% to 90% by weight of the volatile system will be water and the balance (10% to 35% by weight) will be organic volatile solvents, including amine, ammonia or ammonium hydroxide. Preferably, the ratio of water to organic volatiles will be 70:30 to 80:20 in the volatile system. Each component of the solvent system will be present in between 1% by weight and 20% by weight of the final composition.

The resulting aqueous resin dispersions are generally stable for a sufficient period of time to be useful as coating compositions, provided the polyvinyl halide-based graft copolymer contains at least the requisite 5% by weight of carboxylic acid-containing monomers prior to neutralization. In an optional but preferred embodiment, the carboxylic acid monomeric content of the graft copolymer resins herein and hence the stability of the aqueous dispersion ultimately prepared therefrom, is enhanced by binding some of the associated unreacted carboxylic acid-containing polymeric material in the graft polymerization reaction mixture to the acid groups on the copolymer resin particle surfaces using an epoxy resin bridge. Such a procedure involves combination of an appropriate polyfunctional epoxy resin and an appropriate esterification catalyst with a mixture comprising the carboxylic acid-containing polyvinyl halide-based graft copolymer and excess monoethylenically unsaturated carboxylic acid-containing polymeric materials.

The epoxy resins useful in such a bridging procedure are those having an epoxy equivalent weight of from 180 to 5,000, more preferably from 1,000 to 5,000. Useful esterification catalysts include the same amine materials hereinbefore described as useful neutralizing agents.

This procedure for upgrading the carboxylic acid monomer content of the graft copolymer can be carried out in a reaction mixture comprising the graft copolymer, epoxy resin, carboxylic acid-containing polymeric material and esterification catalyst combination in an appropriate anhydrous solvent. The reaction mixture is maintained under esterification reaction conditions, which can include a reaction temperature of from 90°C to 120°C, for a period of time sufficient to complete the bridging reaction to the extent desired, e.g., from 2 to 8 hours. Typical concentrations of reactants and solvents which can be used in such an epoxy bridging procedure are set forth as follows:

| Component | Concentration (wt. %) |
|---|---|
| Polyvinyl Halide-based Graft Copolymer | 10 to 50 of solids |
| Epoxy Resin | 1 to 10 of solids |
| Carboxylic Acid-Containing Polymeric Material | 10 to 50 of solids |
| Esterification Catalyst | 0.10 to 2.0 of solids |
| Solvent | 40 to 65 of reaction mixture |

Upon completion of the bridging reaction to the extent desired, the resulting reaction mixture containing graft copolymer having increased carboxylic acid monomer content can be neutralized and dispersed with water in the same manner as hereinbefore described.

The aqueous coating composition may contain a cross-linking agent, such as an aminoplast. The preferred material used to thermoset the coating, if one is used, is a conventional aminoplast cross-linking agent. Such agents are well known in the art and include urea-aldehyde resins, melamine-aldehyde resins, dicyandiamide-aldehyde resins and other aminoplast-aldehyde resins such as those triazine resins produced by the reaction of an aldehyde with formoguanamine, ammeline, 2-chloro-4,6-diamino-1,3,5-triazine,

2-phenyl-p-oxy-4,6-diamino-1,3,5-triazine, 6-methyl-2,-4-
diamino-1,3,5-triazine, 2,4,6-trihydrazine-1,3,5-triazine, and
2,4,6-triethyltriamino-1,3,5-triazine. The mono-, di-, or triaralkyl
or mono-, di-, or triaryl melamines, for instance, 2,4,6-triphenyl-
triamino-1,3,5-triazine, can be used. Also utilizable are benzoguanamine and hexamethoxymethylmelamine. As aldehydes used to react
with the amino compound to form the resinous material, aldehydes such
as formaldehyde, acetaldehyde, crotonic aldehyde, acrolein, or
compounds which engender aldehydes, such as hexamethylenetetramine,
paraldehyde and paraformaldehyde may be employed. It is preferred to
use an aminoplast that is water soluble. The amount of cross-linking
agent used is generally between 15% and 40% by weight, based on total
resin solids in the aqueous coating compositions herein.

The resultant aqueous coating compositions are primarily
useful for coating aluminum, tin plated steel, pretreated metals,
steel, and metals coated with the same or different resin composition
(i.e., a second coat). The coating composition can, however, also be
used for coating other substrates such as wood, paper, masonry, and
leather. The most preferred and useful use of the coating composition
is for coating of cans, coil stock, and fabricated metal. Coating can
be done by any coating procedure well known to those skilled in the
art including direct roll-coating, electrodeposition, spraying and
flow coating. After coating the substrate, the coating can be cured,
for example, by being forced dry by heating for 1-30 minutes between
32°C and 215°C (90-420°F).

The invention is illustrated by the following examples.

## EXAMPLE I

Into a 12 liter reactor fitted with stirrer, condenser,
thermometer, and addition funnel were charged 1200 parts by weight of
polyvinyl chloride resin VYHH* (Union Carbide), 1020 parts
2-butoxyethanol, 1200 parts diisobutyl ketone, 360 parts of methyl
ethyl ketone and 24 parts of EPON 828** (Shell Chemical). Heating was started under a nitrogen flow through the reactor. At 115°C a premix of 900 parts of butyl methacrylate, 300 parts methacrylic acid and 78 parts benzoyl peroxide was added over 3 hours. Two portions of EPON 828 (24 parts each) were added, one at the half-way point and the other at the end of the premix addition. The reactants were stirred at 115°C for 0.5 hour longer, and two portions of t-butylperoxy isopropyl carbonate (4.8 parts each) were added one hour apart. After an additional hour of heating at 115°C, 300 parts of distillate were removed under vacuum.

During the distillation, the temperature was lowered to 85°C Cymel 303 melamine-formaldehyde resin (120 parts, American Cyanamid) was added with stirring followed by 240 parts of dimethylaminoethanol. Finally, 3600 parts of deionized water were added with efficient stirring.

The dispersion, as prepared, was stable on standing. It had a solids content of 23.8%, an acid number of 79.2 and a particle size of 0.6 as determined by light scattering. When applied by drawdown on aluminum and baked for 75 seconds at 400°F, it formed glossy films with excellent adhesion.

### EXAMPLE II

Into a 2 liter reactor with heating mantle, nitrogen inlet, thermometer and stirrer were charged 225 parts by weight of butanol, 225 parts 2-butoxyethanol and 50 parts of cyclohexanone. Three

---

*   A commercially marketed resin having a molecular weight of about 19,600 and a monomeric composition of about 86% vinyl chloride monomers and 14% vinyl acetate monomers.

**  A commercially marketed epoxy resin which is a diglycidyl ether of bisphenol A having an epoxy equivalent weight of from about 185 to 190.

hundred parts of a dispersion grade PVC polymer (SCC-OH-1, Stauffer Chemical) were added to give a suspension which was heated to 78°C under a nitrogen flow. A premix of methacrylic acid 90 parts, styrene 100 parts, ethyl acrylate 10 parts and 4,4' azobisisobutyronitrile 10 parts were then added over 3 hours at 78°C. An additional 2.5 parts of initiator were then added and the temperature was held for an additional 2 hours.

A portion of the above suspension was washed with hot 2-butoxyethanol after which the solids were recovered by ultracentrifuge. This procedure was repeated until a constant acid number was obtained indicative of the amount of acrylic grafted onto the particles of dispersion vinyl. The amount grafted was 14.3 g acrylic/300 g PVC or 5% of the weight of the PVC.

The reaction mixture did not form a stable dispersion when neutralized with dimethylaminoethanol and dispersed in water. The amount of acrylic bound to the particle surface was therefore increased by binding some of the ungrafted acrylic resin to the acrylic on the surface of the particle by using an epoxy, resin bridge as follows.

In a second 2 liter reactor were charged 193 parts of DER 331* (Liquid epoxy resin, Dow Chemical Co.), 107 parts bisphenol A, 30 parts 2-butoxyethanol and 0.6 parts tri-n-butylamine. The reactants were heated at 150°C until the reaction mixture reached an epoxy value of 0.30 meq/g. 2-Butoxyethanol (50 parts) was added, then 50 parts of water, and then 500 parts of the above acrylated PVC. The temperature was adjusted to 94°C and 6.8 parts of dimethylaminoethanol esterification catalyst were added. The reaction was held at temperature for three hours then 26.6 parts of additional

---

*   A commercially marketed liquid epoxy resin which is a diglycidyl ether of bisphenol A having an epoxy equivalent weight of 185-192.

dimethylaminoethanol were added as a neutralizer.  Water (1200 parts) was added with efficient stirring to form a stable dispersion.  The dispersion was drawn down and baked as in the previous example to give films of good adhesion and flexibility.

F-2075                        -14-

0117350

CLAIMS:

1.    A water-dispersible, polyvinyl halide-based graft
copolymer of a monoethylenically unsaturated monomeric component
comprising monoethylenically unsaturated carboxylic acid monomers,
onto a vinyl resin backbone comprising vinyl chloride homopolymers or
copolymers or vinylidene halide homopolymers or copolymers, wherein at
least % of the total weight of said graft copolymer is derived from
monoethylenically unsaturated carboxylic acid monomers.

2.    A graft copolymer according to Claim 1 wherein said
monoethylenically unsaturated monomer component comprises carboxylic
acid-containing monomers selected from acrylic acid and methacrylic
acid.

3.    A graft copolymer according to Claim 1 or Claim 2
wherein said vinyl resin backbone has a molecular weight ranging from
5,000 to 35,000.

4.    A method for preparing a water-dispersible, polyvinyl
halide-based graft copolymer, said method comprising
      a)    forming a solution or slurry of a vinyl resin material
selected from vinylchloride homopolymers or copolymers and vinylidene
halide homopolymers or copolymers, in a substantially anhydrous
organic solvent;
      b)    combining with said solution or slurry both a free
radical initiator and a monoethylenically unsaturated monomeric
component comprising monoethylenically unsaturated carboxylic acid
monomers, to thereby form a reaction mixture; and
      c)    maintaining said reaction mixture under free radical
graft polymerization conditions for a time sufficient to form a
polyvinyl halide-based graft copolymer containing monoethylenically
unsaturated carboxylic acid monomers to the extent of at least 5% by
weight of said graft copolymer.

5.   A method according to Claim 4 wherein said vinyl resin backbone has a molecular weight of from 8,000 to 20,000 and comprises vinyl chloride-containing homopolymers and copolymers.

6.   A method according to Claim 4 or Claim 5 wherein said reaction mixture additionally contains during said graft polymerization reaction a stabilizing agent comprising an epoxy resin having an epoxy equivalent weight of from 180 to 800.

7.   A method according to any one of Claims 4 to 6 wherein said graft copolymer resin from said reaction mixture is upgraded in carboxylic acid polymer content by combining said graft copolymer with a polyfunctional epoxy resin having an epoxy equivalent weight of from 180 to 5,000, with associated unreacted carboxylic acid-containing polymeric material and with an amine esterification catalyst in a substantially anhydrous organic solvent to thereby form an epoxy-bridging reaction mixture which is maintained under esterification reaction conditions for a time sufficient to upgrade carboxylic acid content of the graft copolymer.

8.   A coating composition comprising an aqueous dispersion of a polyvinyl halide-based graft copolymer of a monoethylenically unsaturated monomeric component comprising monoethylenically unsaturated carboxylic acid monomers, onto a vinyl resin backbone comprising vinyl chloride homopolymers or copolymers or vinylidene halide homopolymers or copolymers, wherein at least 5% of the total weight of said graft copolymer is derived from monoethylenically unsaturated carboxylic acid monomers, said graft copolymer being neutralized to at least 10% with a neutralizing agent selected from ammonia, ammonium hydroxide and tertiary amines, said aqueous dispersion having a solids content of from 10% to 40% by weight.

9.    A coating composition according to Claim 8 wherein said aqueous dispersion has a solids content of from 18% to 35% and comprises polymeric material in particulate form having an average particle size of from 0.10 to 0.60 micron.

10.    A coating composition according to Claim 8 or Claim 9 which additionally contains an aminoplast curing agent.

11.    A method for preparing a coating composition comprising an aqueous dispersion of a polyvinyl halide-based graft copolymer, said method comprising

a)    forming a solution or slurry of a vinyl resin material selected from vinylchloride homopolymers or copolymers and vinylidene halide homopolymers or copolymers, in a substantially anhydrous organic solvent;

b)    combining with said solution or slurry both a free radical initiator and a monoethylenically unsaturated monomeric component comprising monoethylenically unsaturated carboxylic acid monomers, to thereby form a reaction mixture;

c)    maintaining said reaction mixture under free radical graft polymerization conditions for a time sufficient to form therein a polyvinyl halide-based graft copolymer containing monoethylenically unsaturated carboxylic acid monomers to the extent of at least 5% by weight of said graft copolymer;

d)    neutralizing said graft copolymer in said reaction mixture with a neutralizing agent selected from ammonia, ammonium hydroxide and tertiary amine; and

e)    dispersing said neutralized graft copolymer in water to form an aqueous dispersion having a solids content of from 10% to 40% by weight.

1960H